# EUROPEAN PATENT APPLICATION

(11) **EP 1 798 072 A2**
(43) Date of publication of application: **20.06.2007**
(21) Application number: 06125722.6
(22) Date of filing: 08.12.2006
(51) Int. Cl.: B60C 15/00

(54) **Tire with improved high speed capability and a method of manufacturing**

(30) Priority: 15.12.2005 US 304872
(71) Applicant: THE GOODYEAR TIRE & RUBBER COMPANY, Akron, Ohio 44316-0001 (US)
(72) Inventor: Roman, John Patrick, Hudson, Ohio 44236 (US)
(74) Representative: Kutsch, Bernd

(57) **Abstract**

A radial pneumatic tire (10) has a pair of bead cores (26), a carcass (30) having a carcass ply (40) extending between and turned up around the bead cores (26) from the axially inside to the outside to form a pair of turnup ends (44,44'); a rubber tread (12) disposed radially outside the carcass (30); a belt structure (36) having a first belt ply (37) and a second belt ply (39) disposed adjacently between the carcass (30) and the tread (12). Each of the turned up ends (44,44') of said carcass ply (40) extends radially outward overlying at least a portion of one or both of the at least first and second belt plies (37,39). The tire (10) is manufactured by shaping a carcass (30) and applying a belt reinforcing structure (36) to the carcass (30) and then turning up the carcass ends (44,44') over at least a portion of the belt reinforcing structure (36) along each respective lateral edge of at least one belt layer (37), preferably covering all the lateral edges of two or more belt layers (37,39).

## Description

### Field of the Invention

This invention relates to a radial pneumatic tire, more specifically to a passenger vehicle tire or light truck tire adapted for relatively high speed, and to a method to manufacture such a tire.

### Background of the Invention

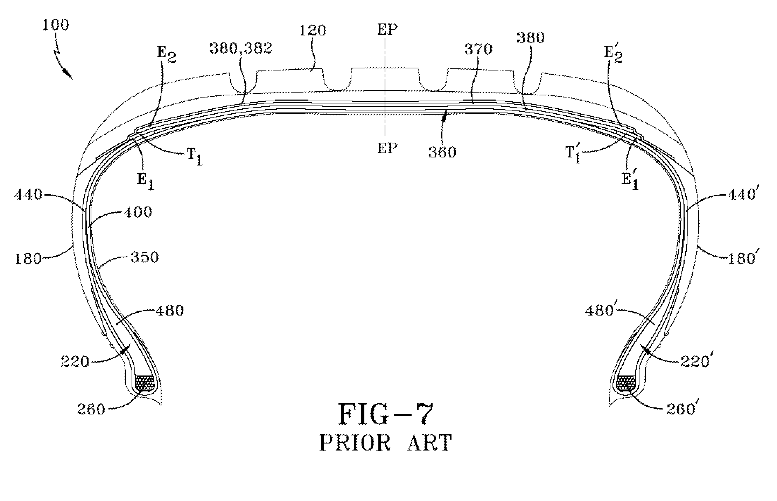

Typically a high performance or speed rated radial tire has a low aspect ratio or low profile carcass structure having one or more radial carcass plies and a circumferentially extending belt reinforcing structure located between the tread and the carcass for reinforcing the crown area of the tire. In addition to control excessive circumferential growth or expansion due to high speed rotation these tires typically have a textile cord reinforced overlay as shown in figure 7. These overlays can be one or more ply layers reinforced by generally circumferentially extending cords oriented at 0° relative to a center plane or equatorial plane (EP) of the tire. As used herein equatorial plane means the plane perpendicular to the tire's axis of rotation and passing through the center of the tread.

Often these overlays are spirally wound over the belt reinforcing structure in narrow strips and at each axial edge of the belt reinforcing structure multiple windings may be used to insure the belt edges do not lift or separate from the underlying carcass.

Typically the underlying radially innermost first belt layer is the widest of the belt layers with the second belt layer being slightly narrower in axial width. Typically the belt reinforcing structure has two or more layers reinforced by parallel cords of equal but substantially oppositely oriented cords. The cords of the belt layers are most often made of steel while the overlay cords are generally nylon, rayon or polyamide (aramid) cords.

Improvements in overall tire construction, generally, and more specifically to high speed tires now make it possible to provide such a tire without using such overlays or if used only in a very limited region. The present invention described below provides both a new high performance tire as well as a unique method of manufacturing such a tire.

### Summary of the Invention

A radial pneumatic tire has a pair of bead cores disposed one in each bead portion of the tire, a carcass having a carcass ply having radially arranged cords turned up around the bead cores from the axially inside to the outside to form a pair of turnup ends, a rubber tread disposed radially outside the carcass, and a belt reinforcing structure having at least a first belt ply and a second belt ply disposed preferably adjacently between the carcass and the tread, wherein each of the turned up ends of said carcass ply extends radially outward overlying at least a portion of one or both of the at least first and second belt plies.

In one aspect of the invention, the first belt ply and the second belt ply are disposed adjacently between the carcass and the tread.

The tire as described above is manufactured by a method of shaping a carcass and applying a belt reinforcing structure to the carcass and then turning up a pair of carcass ply turnup ends over at least a portion of the belt reinforcing structure along lateral belt edges. The method may further include the steps of applying a pair of sidewalls axially spaced on a tire building drum; overlaying a radial carcass ply on the tire building drum covering each sidewall and extending outwardly beyond each sidewall; placing a bead core and apex filler on the radial carcass ply and axially inward of the sidewall to form an assembly; inflating the assembly; applying a belt reinforcing structure having two or more belt layers to a crown region of the assembly; turning upwardly the pair of sidewalls and the carcass ply from each bead thereby forming a pair of carcass ply turnup ends which overlap and cover at least a portion of the belt reinforcing structure along each lateral edge; and applying a tread layer to form a tire assembly.

Dependent claims cover preferred embodiments of the invention.

### Definitions

"Aspect Ratio" means the ratio of its section height to its section width.

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Belt Structure" or "Reinforcing Belts" means at least two annular layers or plies of parallel cords, woven or unwoven, underlying the tread, unanchored to the bead, and having both left and right cord angles, preferably in the range from 17° to 27° with respect to the equatorial plane of the tire.

"Circumferential" means lines or directions extending along the perimeter of the surface of the annular tread perpendicular to the axial direction.

"Carcass" means the tire structure apart from the belt structure, tread, and undertread, but including the beads.

"Chafers" refers to narrow strips of material placed around the outside of the bead to protect cord plies from the rim, distribute flexing above the rim.

"Cord" means one of the reinforcement strands which the plies in the tire comprise.

"Equatorial Plane (EP)" means the plane perpendicular to the tire's axis of rotation and passing through the center of its tread.

"Ply" means a layer of rubber-coated parallel cords.

"Radial" and "radially" mean directions radially toward or away from the axis of rotation of the tire.

"Tread Width" means the arc length of the tread surface in the axial direction, that is, in a plane parallel to the axis of rotation of the tire.

### Brief Description of the Drawings

The invention will be described by way of example and with reference to the accompanying drawings in which:
FIG. 1 is a cross sectional view of the tire made in accordance with a first embodiment of the invention.
FIG. 2 is an enlarged cross sectional view of one upper shoulder portion of the tire according to the first embodiment of the invention.
FIG. 3A through 3D are schematic tire building processes showing an exemplary method of manufacturing the tire of the first embodiment.
FIG. 4 is a cross section of an enlarged upper shoulder portion of the tire of an alternative embodiment according to the present invention.
FIG. 5 is a cross section of an enlarged upper shoulder portion of the tire of a second alternative embodiment.
FIG. 6 is a cross section of an enlarged upper shoulder portion of the tire of a third alternative embodiment.
FIG. 7 is a cross sectional view of a prior art tire having an overlay.

### Detailed Description of the Invention

With reference to figure 7 there is illustrated a cross sectional view of a prior tire art tire 100. The tire 100 is a passenger tire having a tread 120, a belt structure 360, a pair of sidewall portions 180, 180' a pair of bead portions 220, 220' and a carcass reinforcing structure 300. The carcass 300 includes a radial ply 400 with turnups 440, 440' underlying a belt structure 360, an air impermeable liner 350 and a pair of beads 260, 260' and a pair of bead fillers 480, 480'. The belt structure 360 as shown is located between the carcass ply and the tread portion. The belt structure 360 has at least two layers or belt plies 370, 380 of parallel cords 362 woven or unwoven underlying the tread unanchored to the bead and having both left and right cord angles and arranged from 17° to 27° with respect to the equatorial plane of the tire. As further shown a reinforced overlay belt layer 381 is located radially outward of the belt reinforcing structure, the reinforced overlay belt layer 381 has an axial width which is larger than the axial width of the widest belt reinforcing structure. In practice this reinforcing overlay belt 381 is provided to improve the high speed durability of the tire. This prior art overlay belt 381 may comprise one or more belt layers and alternatively may be provided in strips of narrow width which are spirally wound about the tire in multiple layers to create an overlay belt structure. The cords 382 in an overlay belt 381 are preferably oriented at a different angle than the cords 362 of the belts 370, 380 of the belt reinforcing structure 360. It is believed that the cords 382 of the prior art overlay belt 381 should be 0° to 12°.

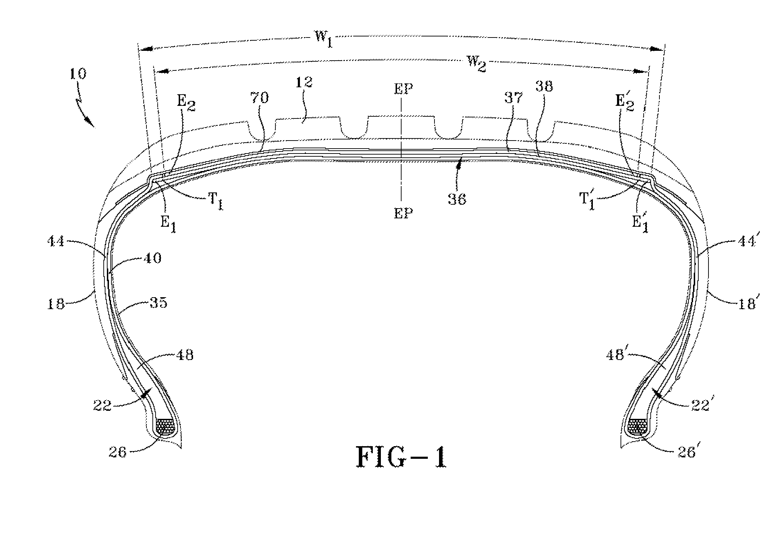

With reference to figure 1 a cross sectional view of the tire 10 made in accordance with a preferred first embodiment of the invention is shown. The tire 10 is a radial pneumatic tire having a pair of bead cores 26, 26' disposed one in each bead portion 22, 22', a carcass structure 30 having an air impermeable inner liner 35, a carcass ply 40 having radially arranged cords 42 turned up around the bead cores from the axially outside thereof to form a pair of turnup ends 44, 44', a rubber tread 12 disposed radially outside of the carcass 30, and a belt reinforcing structure 36 having at least a first belt ply 37 and a second belt ply 39 disposed adjacently between the carcass 30 and the tread 12. Each of the turnup ends 44, 44' of said carcass ply 40 extends radially outward overlying at least a portion of one or both of the at least first or second belt plies 37, 39 as shown both ends E₁ and E₂ and E₁' and E₂' on each side of the tire are covered by the turnup ends 44, 44'.

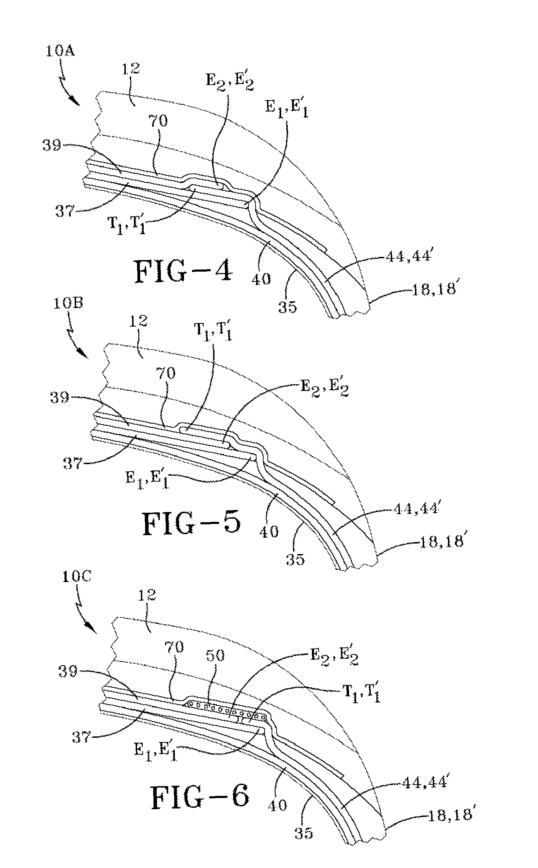

The first belt ply 37 has a width W₁ extending between a pair of lateral edges E₁ and E₁' as shown. The second belt ply 39 has a width W₂ extending between lateral edges E₂ and E₂' in Figure 1. As shown the width W₁ of the first belt ply 37 is greater than the width W₂ of the second belt ply 39. Alternatively, the belt plies 37, 39 can be equal or greater in width. As shown the turnup ends 44, 44' of the carcass ply 40 extend to terminal ends T₁ and T₁'. The turnup ends T₁, T₁' are at a location axially inward of both pair of lateral edges E₁ and E₂ and E₁' and E₂' respectively as shown relative to an axial direction.
With reference to figure 4 a first alternative embodiment tire 10A is shown wherein the terminal ends T₁, T₁' of the turnups 44, 44' are interposed between the lateral edges E₁, E₂ and E₁', E₂' respectively. In this embodiment the turnup ends 44, 44' overlie the first belt layer lateral edges E₁, E₁', but are positioned between the first belt layer 37 and the second belt layer 39, this provides spacing between the belt edges E₁, E₂ and E₁', E₂'.

With reference to figure 5 a second alternative embodiment of the tire 10B claimed in the present invention is shown where the terminal ends T₁, T₁'extend to a location axially inward of lateral edges E₁, E₁' but not E₂, E₂. In this embodiment the turnup ends 44, 44' extend axially inward over belt ply 37 as shown creating a circumferential restriction for belt ply 37 along lateral edges E₁, E₁', but not for belt ply 39

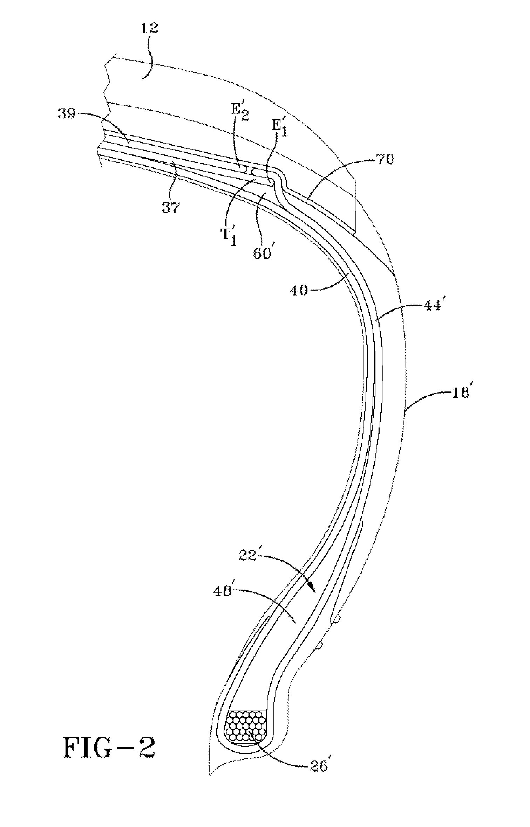

With reference to figure 6 a third embodiment tire 10C of the invention is shown. The third embodiment tire 10C of the invention has the terminal ends T₁, T₁' extending to and overlapping lateral edges E₁, and E₁', respectively and in addition this tire has an overlay strip 50, the overlay strip 50 being wound one or more times about the circumference of the tire 10C overlapping at least the location of the terminal ends T₁, T₁' respectively. As shown the use of overlay strips 50 along the lateral edges E₁, E₂ and E₁', E₂' may be used in any of the embodiments shown in figures 1, 2, 4, 5 and 6. The use of overlay cords in combination with the turnup ends 44, 44' over the belt structure 36 provides additional circumferential restriction of the tire 10, 10A, 10B or 10C in this location. The advantage of the present invention is that the turnup ends 44, 44' extend over at least one of the lateral edges E₁, E₂ and E₁', E₂' of the belt layers 37, 39 in such a manner that the turnup ends 44, 44' assist in creating a circumferential restriction of the belt edges and provide additional high speed durability of the tire as manufactured. In most cases high speed tires 10 according to the present invention can be satisfactorily made without the use of the additional overlay strips or layers. At the lower speeds the use of overlay strips can be avoided thereby saving cost. This simplifies the method of manufacturing the tire and provides a tire not only with improved high speed durability, but additional reinforcement in the sidewalls 18. This additional reinforcement in the sidewalls 18 is achieved by having the turnup ends 44, 44' extend from the bead core 26, 26' up to and overlying one or more of the belt edges E₁, E₂ and E₁', E₂'.

High turnup plies have been known in the prior art, such turnup plies have been disclosed in US-A- 5,871,602 which was a run flat tire having sidewall reinforcements. In this prior art tire the high turnup ends were buried under the belt reinforcing structure. In practice this has been the common method of manufacturing an envelope turnup ply as the phrase is commonly referred to. Under these circumstances the turnup end is anchored between the carcass ply and the belt structure to help secure its location. In the present invention the ply turnup cords are used to help anchor the lateral edges of the belt reinforcing structure 36. This has the benefit of creating a substantially reinforced lateral edge that is improved in its high speed durability due to the fact that the turnup ends 44, 44' provide a resistance from excessive circumferential growth in the radial direction. This is the equivalent to providing tie downs or reinforcements of very close spacing all along the outer circumference of the tire 10. Heretofore the use of radial extending cords has been considered insufficient for providing high speed durability, however, due to the fact that the cords of the belt structure 36 are slightly angled typically in the range of 17° to 27° relative to the equatorial plane insures that the radial ply turnup ends 44, 44' cover at least one preferably more than one of the cords of at least the widest belt layer, the first belt layer 37 more preferably covering one or more cords in both belt layers 37, 39. With this in mind the tire 10 as shown in the present invention can restrain at least circumferential growth by providing a tensioned resistance along the cord length of the turnup at each and every cord of the belt structure 36 to which it is overlying. In addition the use of optional overlay strips 50 at the lateral edges can be minimized such that the combination provides a very high speed durable tire for its application. As shown these tires 10, 10A, 10B and 10C are suitable for use in any passenger or light truck application where high speed durability and sidewall durability is desirable. Preferably the cords of the carcass ply 40 are made of a synthetic material such as rayon, nylon, polyester or aramid. Whereas the cords of the belt layers 37, 39 are made of fiberglass, aramid, steel or any other material suitable for crown reinforcement.

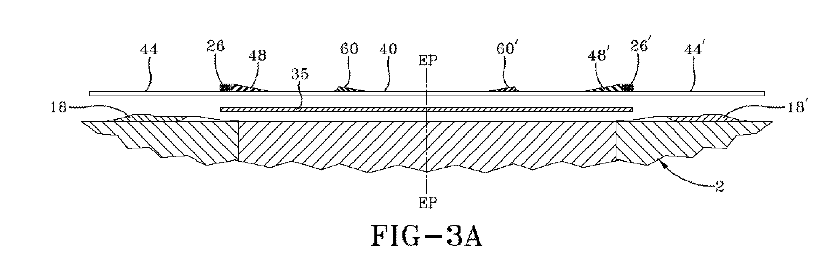

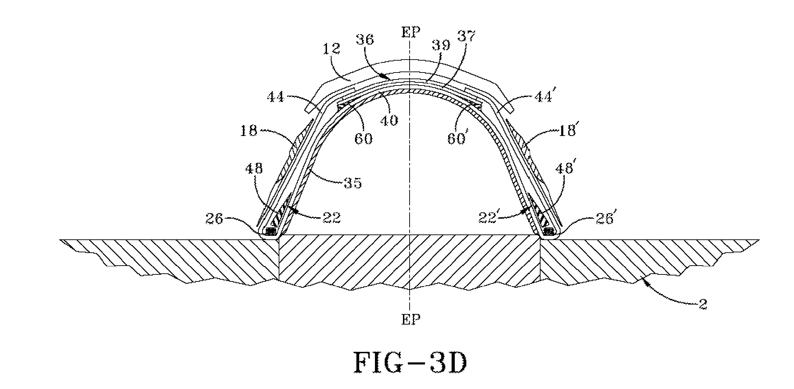

With reference to figures 3A - 3D, the tire 10 according to the present invention is shown using a tire building process or method of manufacture as described below. First the carcass assembly 30 is manufactured. First by placing a pair of sidewall strips 18 which may include a chafer and a toe guard portion on a tire building drum 2, spaced as shown then overlying one or more radial carcass ply 40 having a width sufficient to overlap both sidewalls 18 as shown. The one or more carcass ply 40 can be a full width ply or a pair of split plies 40 which underlie the belt plies and each extend axially outwardly past a bead core to respective terminal end T₁, T₁' of the turnups 44, 44'. The carcass ply 40 is then stitched and a pair of apex fillers 48, 48' and bead cores 26, 26' is applied to the carcass as shown. Optionally a pair of elastomeric wedges 60, 60' can be positioned axially inward of the apex fillers 48, 48' as shown. These wedges 60, 60' are used to provide elastomeric support for the belt reinforcing structure 36 and are positioned between the carcass ply 40 and the belt reinforcing structure 36.

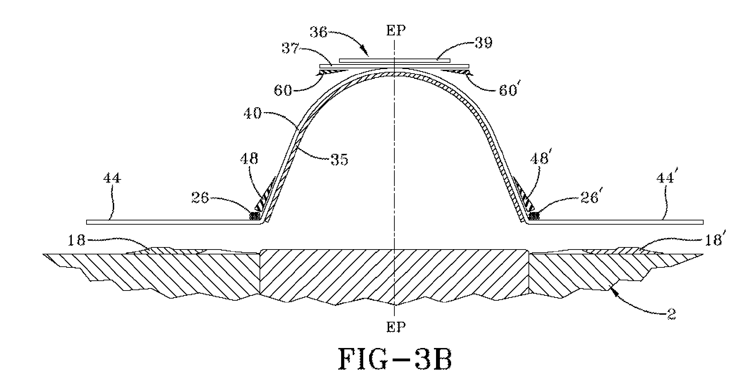

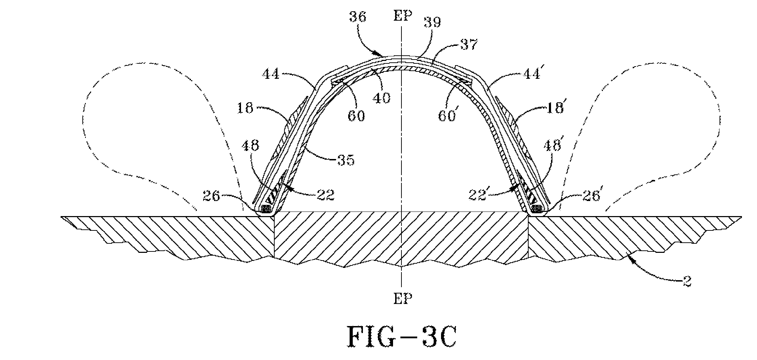

With reference to figure 3B, the carcass subassembly 30 is inflated in such a fashion that the apex fillers 48, 48' and the wedges 60, 60' are moved into a position as shown. The tire 10 when inflated or mechanically shaped forms a generally toroidal shape wherein the belt reinforcing structure 36 can be applied, either as a first layer 37 and a second layer 39 or both layers 37, 39 applied simultaneously.

With reference to figure 3C, once the belt structure 36 is applied to the carcass 30, the turnup ends 44, 44' of the ply 40 along with the sidewall 18, 18' are folded upward in such a fashion to contact the apex filler 48, 48' and the underlying carcass 40 in such a fashion that the turnup ends 44, 44' extend radially outwardly and over at least a portion of the belt reinforcing structure 36. At this point in the tire assembly a tread 12 can be applied over the belt reinforcing structure 36 and the turnup ends 44, 44' of the underlying carcass structure 30.

As shown this method of manufacture provides a tire having the carcass ply turnup ends 44, 44' overlying one or both pairs of lateral edges E₁, E₂ or E₁', E₂' of the belt structure 36 which provides additional support for high speed durability. In addition prior to applying the tread 12 if desired for additional high speed durability, overlay strips 50 or an overlay layer 50 may be applied to the tire carcass 30 such that the turnup ends 44, 44' are overlying at least a portion of the belt structure 36 and the overlay 50 is covering the terminal ends T₁ and T₁' of the turnup ends 44, 44' and the lateral edges the belt layers 37,39 which provides additional circumferential restriction to the tire 10 while operated at high speeds.

## Claims

1. A radial pneumatic tire comprising:
a pair of bead cores (26) disposed one in each bead portion (22) of the tire (10);
a carcass having a carcass ply (40) having radially arranged cords turned up around the bead cores (26) from the axially inside to the outside to form a pair of turnup ends (44, 44');
a rubber tread (12) disposed radially outside the carcass;
a belt structure (36) having at least a first belt ply (37) and a second belt ply (39) disposed between the carcass (30) and the tread (12); **characterized in that**
each of the turned up ends (44, 44') of said carcass ply (40) extends radially outward overlying at least a portion of one or both of the at least first and second belt plies (37, 39).

2. The radial pneumatic tire of claim 1 wherein the first belt ply has a width W₁ extending between a pair of lateral edges E₁, E₁' and the second belt ply has a width W₂ extending between lateral edges E₂, E'₂, wherein W₁ ≥ W₂.

3. The radial pneumatic tire of claim 2 wherein the turnup ends (44, 44') of the carcass ply (40) extend to a terminal ends T₁, T'₁, T₁ T₁' being at a location between the pair of lateral edges E₁ and E₂ or E'₁ and E'₂ respectively.

4. The radial pneumatic tire of claim 3 further comprising a pair of overlay strips, each overlay strip being wound one or more times about the circumference of the tire (10) overlapping at least the terminal ends T₁, or T'₁ of the carcass ply (40) respectively and the lateral edges E₂ or E'₂ respectively.

5. The radial pneumatic tire of claim 2, 3 or 4 wherein the terminal ends T₁, T'₁ extend to a location axially inward of both lateral edges E₁, E₂ or E'₁, E'₂ respectively.

6. The radial pneumatic tire of claim 5 wherein the terminal ends T₁, T'₁ are interposed between the lateral edges E₁, E₂, and E'₁, E'₂ respectively, or wherein the terminal ends T₁, T₁' of turnup ends extend to and overlap both lateral edges E₁, E'₁ and E₂, E'₂ respectively.

7. The radial pneumatic tire of claim 5 further comprising a pair of overlay strips, each overlay strip being wound one or more times about the circumference of the tire overlapping at least the location of the terminal ends T₁ or T'₁ respectively.

8. The radial pneumatic tire of at least one of the previous claims further comprising one or more cord reinforced overlay extending axially across the belt structure (36) and covering both terminal ends T₁, T'₁ of the turnup ends (44, 44') of the carcass ply (40).

9. A method of manufacturing a radial pneumatic tire (10) comprising the steps of:
forming and shaping a radial ply carcass;
applying a belt reinforcing structure (36) to the carcass;
turning a pair of turnup ends (44, 44') of the radial ply over at least a portion of the belt reinforcing structure (36) along lateral belt edges; and
applying a tread (12).

10. The method of claim 9 comprising the steps of:
applying a pair of sidewalls axially spaced on a tire building drum;
overlaying a radial carcass ply (40) on the tire building drum covering each sidewall and extending beyond each sidewall;
placing a bead core and apex filler on the radial carcass ply (40) and axially inward of the sidewall to form an assembly;
inflating the assembly;
applying a belt reinforcing structure (36) having two or more belt layers to a crown region of the assembly;
turning upwardly the pair of sidewalls and the carcass ply (40) from each bead thereby forming a pair of carcass ply turnup ends (44, 44') which overlap and cover at least a portion of the belt reinforcing structure (36) along each lateral edge;
applying a tread layer to form a tire assembly, and, optionally, applying a pair of elastomeric wedges axially inward of the apex fillers wherein said belt reinforcing structure overlays the wedges along lateral edges of the belt reinforcing structure.
